# EUROPEAN PATENT SPECIFICATION

(11) **EP 4 059 472 B1**
(45) Date of publication and mention of the grant of the patent: **24.07.2024**
(21) Application number: 20888490.8
(22) Date of filing: 25.08.2020
(51) Int. Cl.: A61C 17/02, A61C 17/22

(54) **MOUTH CLEANING DEVICE NOZZLE**
MUNDREINIGUNGSVORRICHTUNGSDÜSE
BUSE DE DISPOSITIF DE NETTOYAGE BUCCAL

(30) Priority: 11.11.2019 JP 2019203781
(43) Date of publication of application: 21.09.2022
(73) Proprietor: Panasonic Intellectual Property Management Co., Ltd., Osaka-shi, Osaka 540-6207 (JP)
(72) Inventor: TANIGUCHI, Shinichi, Osaka-shi, Osaka (JP); HONDA, Misa, Osaka-shi, Osaka (JP)
(74) Representative: Grünecker Patent- und Rechtsanwälte PartG mbB
(86) International application number: PCT/JP2020/031930
(87) International publication number: WO 2021/095320

(56) References cited:
- EP-A1- 2 438 886
- WO-A1-2010/140660
- JP-A- 2008 132 099
- JP-A- 2008 272 038
- JP-A- 2010 524 625
- JP-A- 2014 050 641
- JP-B1- 4 815 018

## Description

### TECHNICAL FIELD

The present disclosure relates to a mouth cleaning device nozzle.

### BACKGROUND ART

In the prior art, there is a mouth cleaning device that ejects a liquid from a nozzle to wash a mouth. PTL 1 discloses a mouth cleaning device that ejects a high-speed jet water flow from a nozzle toward teeth and gums. PTL 2 discloses a mouth cleaning device in which bristles having a truncated cone shape are combined with a nozzle.

### Citation List

### Patent Literature

PTL 1: Unexamined Japanese Utility Model Publication No. 55-142117
PTL 2: WO 2007/101210

EP 2438886 A1 discloses a mouth cleaning device nozzle as described in the preamble of claim 1. A similar mouth cleaning device nozzle is known from JP 4 815018 B1.

### SUMMARY OF THE INVENTION

In the mouth cleaning device disclosed in PTL 1, the jet water flow ejected from the nozzle directly reaches an interdental part or the like. Accordingly, according to such a jet water flow, massage of a gum part and the like can be performed in addition to washing the interdental part, a gingival margin part, a periodontal pocket, or the like. However, it is difficult to remove dental plaque, for example, only with the jet water flow.

In the mouth cleaning device disclosed in PTL 2, a truncated conical one-tuft brush is combined with a distal end of the nozzle. However, it is difficult for a user such a mouth cleaning device, since there is a concern that water may splash around during use or since the nozzle handle is bent at an obtuse angle.

The present disclosure has been made in view of such problems of the prior art. An object of the present disclosure is to provide a mouth cleaning device nozzle which is advantageous in enhancing detergency such as plaque removing quality or improving usability for a user.

In order to solve the above problem, a mouth cleaning device nozzle according to an aspect of the present disclosure comprises a bristle bundle at a distal end portion in a longitudinal direction of the mouth cleaning device nozzle. A protruding direction of the bristle bundle is in an angular range of 85° to 95° with respect to the longitudinal direction.

A mouth cleaning device nozzle according to another aspect of the present disclosure comprises a bristle bundle at a distal end portion in a longitudinal direction of the mouth cleaning device nozzle. The distal end portion ejects a liquid to an outside through a bristle transplantation portion of the bristle bundle. The bristle bundle has a space region in which the liquid led out from the bristle transplantation portion flows. The space region is gradually narrowed from the bristle transplantation portion toward a distal end of the bristle bundle.

According to the present disclosure, it is possible to provide the mouth cleaning device nozzle which is advantageous in enhancing detergency such as plaque removing quality or improving usability for a user.

### BRIEF DESCRIPTION OF THE DRAWINGS

Fig. 1 is a perspective view illustrating a mouth cleaning device according to an exemplary embodiment.
Fig. 2 is a side view illustrating the mouth cleaning device nozzle according to the exemplary embodiment.
Fig. 3 is an exploded view of the mouth cleaning device nozzle according to the exemplary embodiment.
Fig. 4 is a diagram illustrating a bristle bundle of the mouth cleaning device nozzle according to the exemplary embodiment.
Fig. 5A is a diagram illustrating a bristle bundle holder of the mouth cleaning device nozzle according to the exemplary embodiment.
Fig. 5B is a diagram illustrating the bristle bundle holder of the mouth cleaning device nozzle according to the exemplary embodiment.
Fig. 6 is a diagram illustrating a back surface cover of the mouth cleaning device nozzle according to the exemplary embodiment.
Fig. 7 is a cross-sectional view of a distal end portion of the mouth cleaning device nozzle according to the exemplary embodiment.
Fig. 8 is a diagram for describing an effect of the mouth cleaning device nozzle according to the exemplary embodiment.
Fig. 9A is a diagram for describing an effect of a mouth cleaning device nozzle of the prior art.
Fig. 9B is a diagram for describing an effect of the mouth cleaning device nozzle of the prior art.

### DESCRIPTION OF EMBODIMENT

Hereinafter, an exemplary embodiment will be described in detail with reference to the attached drawings. In the following description, a Z direction is defined as a direction along a longitudinal direction of a mouth cleaning device nozzle that has generally a shaft shape. An X direction and a Y direction perpendicular to each other are defined in a plane perpendicular to the Z direction. Among these directions, the X direction is parallel to a protruding direction in which the bristle bundle protrudes in the example according to the exemplary embodiment.

### (Mouth cleaning device)

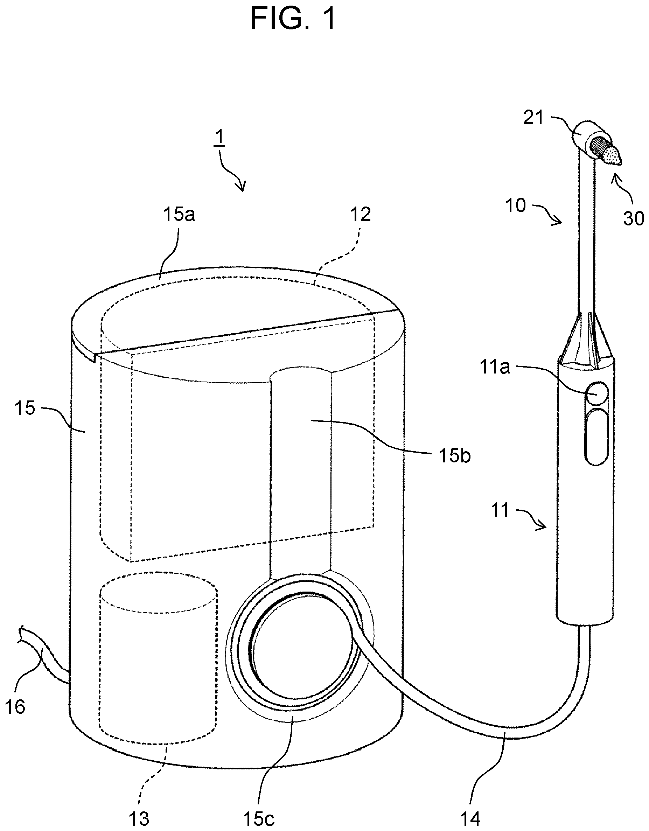

Fig. 1 is a schematic perspective view illustrating mouth cleaning device 1 according to the present exemplary embodiment. Fig. 1 illustrates a state where mouth cleaning device nozzle 10 according to the present exemplary embodiment included in mouth cleaning device 1 has been attached to grip 11. Hereinafter, the mouth cleaning device nozzle is simply referred to as a "nozzle". A user ejects a liquid in a state where bristle bundle 30 provided at distal end portion 21 of nozzle 10 has been inserted into a mouth, and thus, mouth cleaning device 1 is a device that cleans inside the mouth together with a brush effect of bristle bundle 30. In the present exemplary embodiment, the liquid ejected through nozzle 10 is water.

Mouth cleaning device 1 includes, for example, nozzle 10, grip 11, liquid storage tank 12, and pump 13.

Nozzle 10 has distal end portion 21 including a brush portion and a water ejection portion that are actually inserted into the mouth. Nozzle 10 is detachably connected to grip 11. Details of nozzle 10 will be described below.

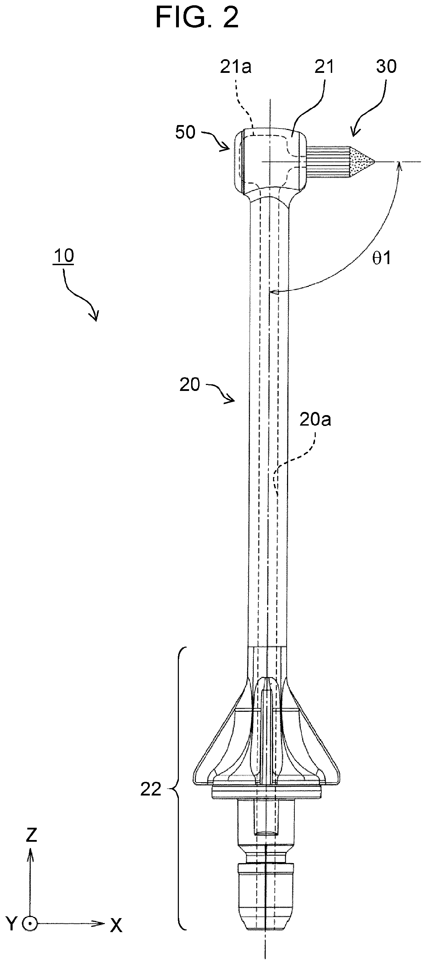

Grip 11 is a columnar body to be gripped by the user when mouth cleaning device 1 is used. Nozzle 10 is connected to one distal end of grip 11 in an axial direction. Hose 14 is connected to the other distal end of grip 11 in the axial direction. Water introduced through hose 14 is guided to extension flow path 20a (see Fig. 2) in nozzle 10 inside grip 11. Grip 11 includes operation switch 11a partially exposed to a front surface side. The user can adjust on and off of the ejection of the liquid by operating operation switch 11a in a state of holding grip 11.

Liquid storage tank 12 stores the liquid to be ejected from nozzle 10. In the present exemplary embodiment, the liquid is water, but may be, for example, a washing liquid in which a washing agent has been mixed with water. Mouth cleaning device 1 may directly draw in tap water or the like from the outside without including liquid storage tank 12.

Pump 13 draws in the liquid stored in liquid storage tank 12 and sends out the liquid to grip 11 through hose 14. For example, a piston pump type can be employed as pump 13. However, a type of pump 13 is not particularly limited.

Mouth cleaning device 1 may include case 15 that houses liquid storage tank 12 and pump 13. In the present exemplary embodiment, it is assumed that mouth cleaning device 1 includes case 15 having a cylindrical outer shape. Case 15 may include upper lid 15a, grip holding portion 15b, and hose holding portion 15c. The user can open upper lid 15a and then supply the liquid to liquid storage tank 12. Grip holding portion 15b can engage and hold grip 11 when mouth cleaning device 1 is not in use. Hose holding portion 15c can wind and hold hose 14 when mouth cleaning device 1 is not in use.

A control board or the like serving as a controller that controls an operation of pump 13 or the like may be installed inside case 15. A power supply for operating pump 13 and the like may be supplied from the outside via power cord 16. Alternatively, mouth cleaning device 1 may be operated in a rechargeable manner by providing a rechargeable battery in case 15, for example. On an outer surface of case 15, an operation button for adjusting the strength of a flow of the liquid at the time of ejection from nozzle 10 may be installed.

### (Nozzle)

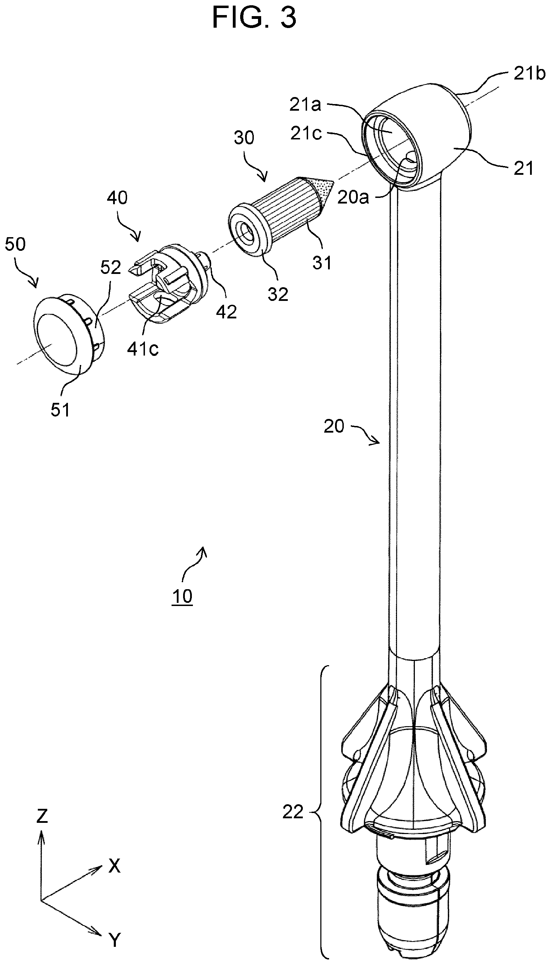

Fig. 2 is a side view of nozzle 10. Fig. 3 is an exploded perspective view of nozzle 10.

Nozzle 10 includes nozzle handle 20, bristle bundle 30, bristle bundle holder 40, and back surface cover 50. These components are basically made of resin, but any of the components other than bristle bundle 30 may be made of metal, for example.

Nozzle handle 20 is a shaft-shaped member extending in a substantially constant direction such that bristle bundle 30 can easily reach a desired location in the mouth from outside the mouth when mouth cleaning device 1 is used. In the present exemplary embodiment, it is assumed that a longitudinal direction of nozzle handle 20 is along the Z direction. In this case, extension flow path 20a formed inside nozzle handle 20 is also along the Z direction.

Nozzle handle 20 has distal end portion 21 for installing bristle bundle 30, bristle bundle holder 40, and back surface cover 50 at one distal end on a side where the liquid flowing through extension flow path 20a is ejected to the outside. Distal end portion 21 has a cylindrical shape of which a central axis is perpendicular to the longitudinal direction of nozzle handle 20. In the present exemplary embodiment, since the longitudinal direction of nozzle handle 20 is along the Z direction, a central axis direction of distal end portion 21 is along the X direction. An inner space of distal end portion 21 is surrounded by first inner wall 21a.

Distal end portion 21 has first opening portion 21b on one side in the central axis direction, and has second opening portion 21c on the other side in the central axis direction, that is, on a side facing first opening portion 21b. In the present exemplary embodiment, shapes of first opening portion 21b and second opening portion 21c are circular. Sizes of first opening portion 21b and second opening portion 21c are defined based on an outer periphery of bristle transplantation portion 32 of bristle bundle 30, which will be described later. Specifically, an inner periphery of first opening portion 21b is smaller than the outer periphery of bristle transplantation portion 32. On the other hand, an inner periphery of second opening portion 21c is larger than the outer periphery of bristle transplantation portion 32.

On the other hand, nozzle handle 20 has connection portion 22 connected to grip 11 at the other distal end on a side where the liquid is introduced into extension flow path 20a from the outside. A shape of connection portion 22 is not particularly limited in the present exemplary embodiment, and is determined in consideration of, for example, durability at the time of use, ease of attachment to or detachment from grip 11, and the like. An O-ring may be attached to a part of connection portion 22 in consideration of sealability when connection portion 22 is attached to grip 11.

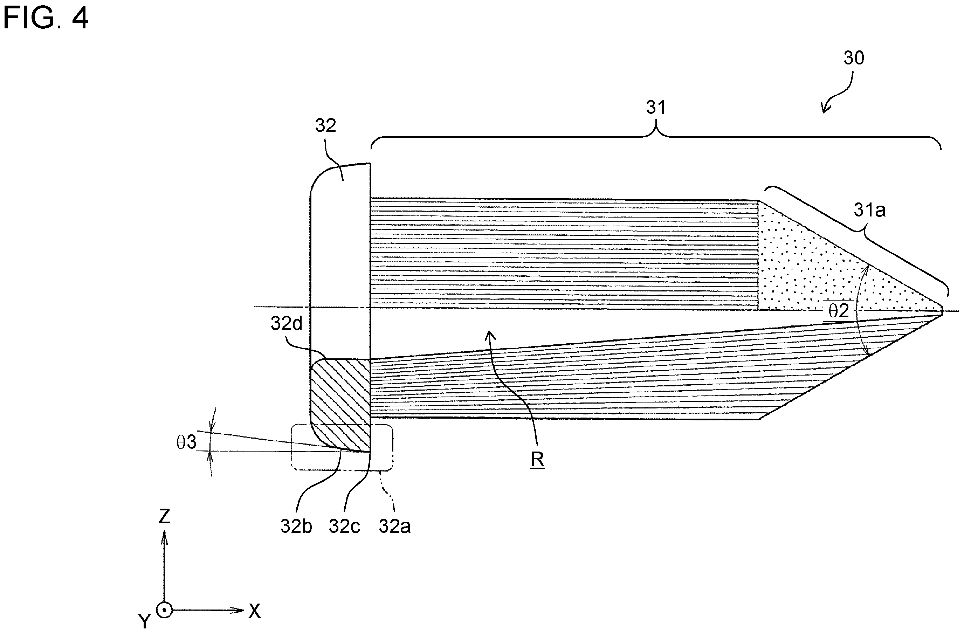

Fig. 4 is a schematic diagram of bristle bundle 30. In Fig. 4, a plus side in the Z direction is a side view and a minus side in the Z direction is a cross-sectional view with respect to the central axis of bristle bundle 30.

Bristle bundle 30 is a member corresponding to a brush portion of nozzle 10. Nozzle 10 includes one bristle bundle 30. Accordingly, bristle bundle 30 in the present exemplary embodiment can be regarded as a so-called one-tuft brush. Bristle bundle 30 includes bristle portion 31 and bristle transplantation portion 32. Bristle portion 31 includes a large number of bristles. Bristle transplantation portion 32 is a base of bristle portion 31.

A distal end of bristle bundle 30, that is, distal end 31a of bristle portion 31 is cut in a conical shape in which vertex angle θ2 is an acute angle. Vertex angle θ2 is in an angular range of 45° to 80°. More desirably, vertex angle θ2 is in an angular range of 55° to 65°.

Bristle transplantation portion 32 has an annular flange shape in which the outer periphery thereof is larger than an outer periphery of bristle portion 31 and first through hole 32d is formed in the central portion thereof. Since bristle portion 31 has a shape transplanted along bristle transplantation portion 32 having such a shape, space region R along an extending direction of the central axis is formed in bristle bundle 30. Space region R is a space through which the liquid led out from bristle transplantation portion 32 through first through hole 32d flows. Among the bristles included in bristle portion 31, the bristles on an inner side close to the central axis are in a posture gradually approaching the central axis from bristle transplantation portion 32 toward distal end 31a. Accordingly, space region R gradually narrows from bristle transplantation portion 32 toward distal end 31a.

Outer peripheral portion 32a of bristle transplantation portion 32 has second facing surface 32b facing first inner wall 21a of distal end portion 21 when bristle bundle 30 is introduced and installed in distal end portion 21. Here, second facing surface 32b is inclined in a direction approaching first inner wall 21a along an introduction direction of bristle bundle 30. In Fig. 4, an inclination angle of second facing surface 32b is represented by first inclination angle θ3. As second facing surface 32b is inclined, first end portion 32c which is an end portion of second facing surface 32b closer to bristle portion 31 has an edge shape.

In the present exemplary embodiment, bristle transplantation portion 32 may be formed by being solidified by thermal fusion from the state of bristles which are a set of a plurality of bristles before bristle bundle 30 is manufactured. In this case, bristle portion 31 is not transplanted in a bristle transplantation portion separately prepared in advance, but some of the bristles to be bristle portion 31 become bristle transplantation portion 32. A flange shape of bristle transplantation portion 32 is also formed at the time of a process of the thermal fusion.

Since it is necessary to provide first through hole 32d in a part of bristle transplantation portion 32, it is advantageous to manufacture bristle bundle 30 by the thermal fusion. However, as long as the method is not a method using a general flat wire, bristle bundle 30 may be formed, for example, by fixing, by adhesion, bristle portion 31 manufactured separately from bristle transplantation portion 32 to bristle transplantation portion 32 processed in advance into the above-described shape.

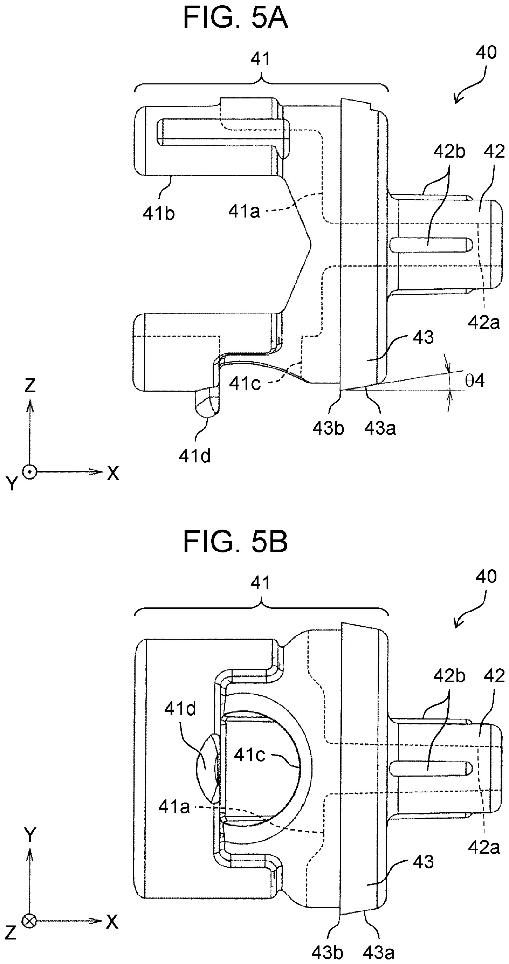

Figs. 5A and 5B are schematic side views of bristle bundle holder 40. Fig. 5A is a side view of nozzle 10 as viewed from a plus side in the Y direction in accordance with the side view. Fig. 5B is a side view seen from the minus side in the Z direction in accordance with the view in an introduction direction of the liquid from extension flow path 20a.

Bristle bundle holder 40 is a member that holds bristle bundle 30 inside distal end portion 21. Bristle bundle holder 40 includes holder body 41 and engagement shaft 42.

Holder body 41 is a cylindrical portion of which an approximate central axis is the central axis of bristle bundle 30, which is parallel to an X axis, or a central axis of the cylindrical shape of distal end portion 21, which is parallel to the X axis. A space formed by second inner wall 41a of holder body 41 serves as a flow path of the liquid when the holder body is attached to distal end portion 21.

Engagement shaft 42 is engaged with first through hole 32d formed in bristle transplantation portion 32 of bristle bundle 30. One end portion of engagement shaft 42 is coaxially connected to holder body 41. Engagement shaft 42 has second through hole 42a along a central axis. One end of second through hole 42a is continuous with the space formed by second inner wall 41a of holder body 41. A plurality of first protrusion portions 42b are formed on the outer peripheral surface of engagement shaft 42.

Holder body 41 has fitting portion 43 which is fitted to first inner wall 21a of distal end portion 21 when bristle bundle holder 40 is housed in distal end portion 21 on an outer periphery on a side to which engagement shaft 42 is connected. Fitting portion 43 has first facing surface 43a facing first inner wall 21a when bristle bundle holder 40 is housed in distal end portion 21. Here, first facing surface 43a is inclined in a direction away from first inner wall 21a along an introduction direction of bristle bundle holder 40. In Fig. 5A, an inclination angle of first facing surface 43a is represented by second inclination angle θ4. As first facing surface 43a is inclined, second end portion 43b which is an end portion of first facing surface 43a on a side opposite to engagement shaft 42 has an edge shape.

Holder body 41 has third through hole 41c at a position facing an opening of extension flow path 20a when bristle bundle holder 40 is housed in distal end portion 21. That is, the liquid flowing through extension flow path 20a passes through third through hole 41c and is introduced into the space formed by second inner wall 41a of holder body 41.

Holder body 41 includes protruding hook 41d which is partially positioned inside extension flow path 20a when bristle bundle holder 40 is housed inside distal end portion 21. In this case, hook 41d is installed on the outer periphery of holder body 41 and near third through hole 41c. Here, in a case where some countermeasure is not taken, when bristle bundle holder 40 is introduced into distal end portion 21, there is a concern that hook 41d is caught on first inner wall 21a of distal end portion 21 and the introduction of bristle bundle holder 40 is hindered. Thus, holder body 41 may have notch portion 41b for deforming an outer wall of a portion where hook 41d is installed such that hook 41d temporarily retracts inward.

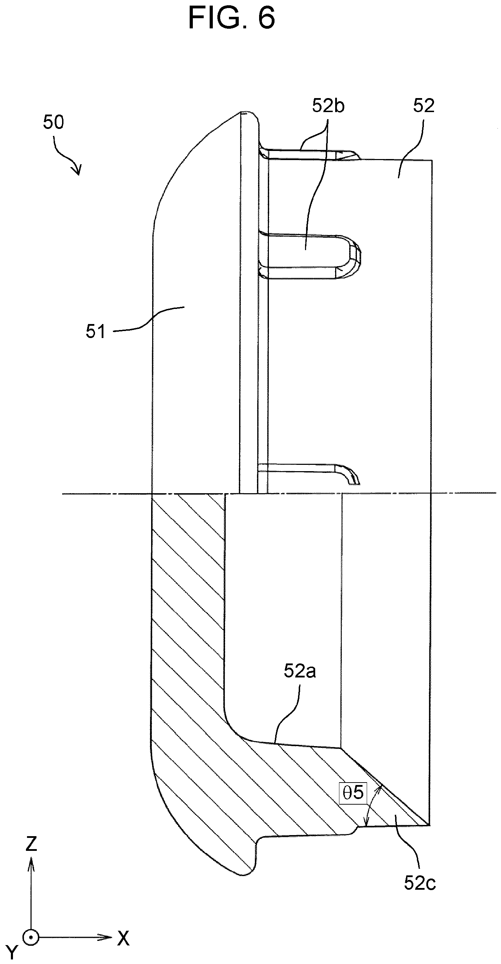

Fig. 6 is a schematic diagram of back surface cover 50. In Fig. 6, the plus side in the Z direction is a side view and the minus side in the Z direction is a cross-sectional view with respect to the central axis of back surface cover 50.

Back surface cover 50 is a member that covers second opening portion 21c after bristle bundle holder 40 holding bristle bundle 30 is housed in distal end portion 21. Back surface cover 50 includes disk-shaped lid portion 51 exposed to the outside and annular housing portion 52 housed in distal end portion 21 in a state of being attached to distal end portion 21.

A space is formed inside housing portion 52 by third inner wall 52a. A plurality of second protrusion portions 52b are formed on an outer peripheral surface of housing portion 52. Furthermore, housing portion 52 has edge portion 52c that is sharpened toward a part of distal end portion 21. In Fig. 6, an inclination angle of edge portion 52c is represented by third inclination angle θ5.

Next, an assembly and an assembled state of elements constituting nozzle 10 will be described.

First, regarding the assembly of the elements constituting nozzle 10, bristle bundle 30 is first attached to bristle bundle holder 40. Specifically, engagement shaft 42 of bristle bundle holder 40 is engaged with first through hole 32d formed in bristle transplantation portion 32 of bristle bundle 30. At this time, the plurality of first protrusion portions 42b formed on engagement shaft 42 are pushed into first through hole 32d, and thus, bristle bundle 30 is fixed to bristle bundle holder 40.

Subsequently, a bristle bundle assembled product in which bristle bundle 30 has been held by bristle bundle holder 40 is introduced into distal end portion 21 of nozzle handle 20 by press-fitting. An introduction direction of the bristle bundle assembled product is a direction from second opening portion 21c toward first opening portion 21b. When the bristle bundle assembled product is introduced into distal end portion 21, bristle portion 31 of bristle bundle 30 finally penetrates to the outside from first opening portion 21b, and third through hole 41c of bristle bundle holder 40 faces the opening of extension flow path 20a and communicates with each other.

Finally, back surface cover 50 is attached to second opening portion 21c of distal end portion 21. Specifically, first, housing portion 52 of back surface cover 50 is inserted into distal end portion 21. At this time, the plurality of second protrusion portions 52b formed on an outer peripheral surface of housing portion 52 come into contact with first inner wall 21a of distal end portion 21, and thus, back surface cover 50 is positioned with respect to distal end portion 21. Besides, edge portion 52c formed in housing portion 52 abuts on a part of the inside of distal end portion 21. Subsequently, back surface cover 50 is fixed to distal end portion 21 by ultrasonic welding. Since back surface cover 50 is positioned with respect to distal end portion 21 before the welding process, the back surface cover is prevented in advance from being installed unevenly from a desired position at the time of welding.

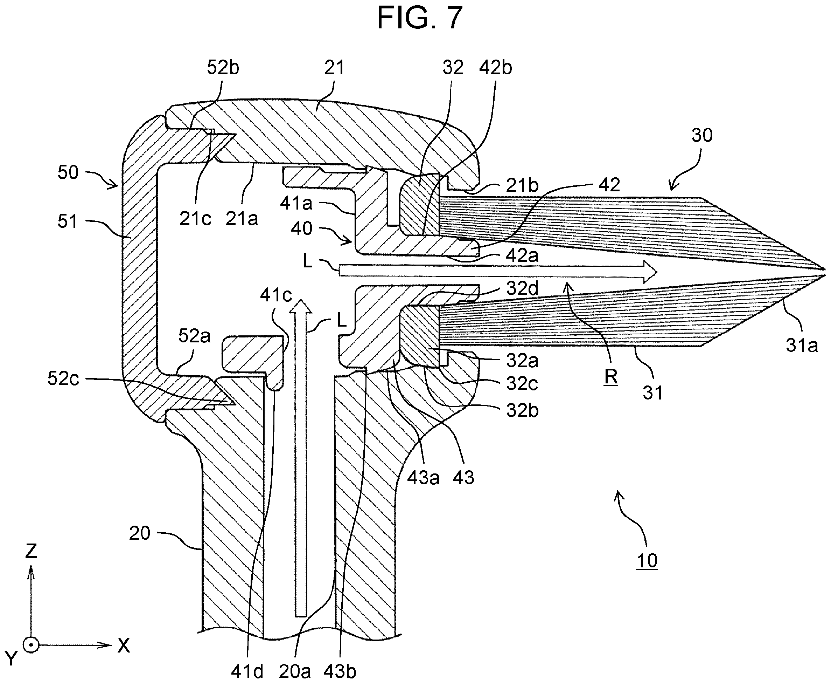

Fig. 7 is a cross-sectional view of distal end portion 21 of nozzle 10 taken along a plane passing through the central axes of nozzle handle 20 and bristle bundle 30. In Fig. 7, a flow path of liquid L flowing through nozzle 10 is indicated by a white arrow.

First, with regard to bristle bundle 30, along with the introduction of the bristle bundle assembled product to distal end portion 21, a part of outer peripheral portion 32a of bristle transplantation portion 32 is press-fitted and fitted into first inner wall 21a of distal end portion 21. At this time, at least a part of second facing surface 32b of bristle transplantation portion 32 comes into contact with first inner wall 21a. Edge-shaped first end portion 32c included in outer peripheral portion 32a is embedded in first inner wall 21a. Outer peripheral portion 32a is press-fitted into first inner wall 21a, and thus, sealability of outer peripheral portion 32a with respect to distal end portion 21 is secured, and saliva or the like hardly enters the inside of distal end portion 21 from the outside through between outer peripheral portion 32a and first inner wall 21a. That is, since it is not necessary to separately use a sealing material such as an O-ring in distal end portion 21, the number of components of nozzle 10 can be reduced, and nozzle 10 can be downsized. First end portion 32c has the edge shape, and thus, even though bristle bundle 30 is pulled along the protruding direction, since first end portion 32c is caught by first inner wall 21a, bristle bundle 30 can be prevented from falling off in advance.

With respect to bristle bundle holder 40, along with the introduction of the bristle bundle assembled product to distal end portion 21, a part of fitting portion 43 is press-fitted and fitted into first inner wall 21a of distal end portion 21. At this time, at least a part of first facing surface 43a of fitting portion 43 comes into contact with first inner wall 21a. Edge-shaped second end portion 43b included in fitting portion 43 is embedded in first inner wall 21a. At least a part of protruding hook 41d is positioned inside extension flow path 20a.

With respect to back surface cover 50, at least a part of edge portion 52c is connected by ultrasonic welding so as to be embedded in distal end portion 21. That is, edge portion 52c can also be expressed as a welded portion.

According to such a configuration of nozzle 10, liquid L which has flowed through extension flow path 20a flows into the inner space of distal end portion 21 through third through hole 41c. Here, the inner space of distal end portion 21 specifically corresponds to a space surrounded by the inner walls of first inner wall 21a of distal end portion 21, second inner wall 41a of bristle bundle holder 40, and third inner wall 52a of back surface cover 50. Liquid L which has flowed into the inner space of distal end portion 21 continuously flows out to space region R of bristle bundle 30 through second through hole 42a of bristle bundle holder 40. Liquid L which has flowed out to space region R is ejected toward distal end 31a of bristle bundle 30 and to the outside as it is.

Subsequently, angle θ1 of the protruding direction of bristle bundle 30 with respect to the longitudinal direction of nozzle 10 will be specifically described. Distal end portion 21 is present at one distal end of nozzle 10, and bristle bundle 30 protrudes outward from distal end portion 21. Here, in the present exemplary embodiment, as illustrated in Fig. 2, the longitudinal direction of nozzle 10 is along the Z direction, and the protruding direction of bristle bundle 30 is along the X direction. That is, the protruding direction of bristle bundle 30 is perpendicular to the longitudinal direction of nozzle 10. However, angle θ1 is not limited to such 90°, and may be any angle included in an angle range of 85° to 95°. In the present exemplary embodiment, since liquid L is ejected through internal space region R extending along the protruding direction of bristle bundle 30, the protruding direction of bristle bundle 30 with respect to the longitudinal direction of nozzle 10 is substantially the same as an ejecting direction of liquid L with respect to the longitudinal direction of nozzle 10.

Next, a basic method of using mouth cleaning device 1 by the user will be described.

After mouth cleaning device 1 is turned on, the user grips grip 11, inserts distal end portion 21 of nozzle 10 into the mouth, and brings distal end 31a of bristle bundle 30 into contact with a desired position in the mouth. Here, the desired position in the mouth is, for example, an interdental part, a gingival marginal part, or a periodontal pocket. The user operates operation switch 11a while holding grip 11, and starts the ejection of liquid L. As a result, the user can brush distal end 31a of bristle bundle 30 at a desired position while ejecting liquid L from bristle bundle 30. During use, the user can adjust the strength of the flow of liquid L and the like by further operating an operation button (not illustrated) installed in case 15. After washing, the user stops the ejection of liquid L and turns off mouth cleaning device 1 by further operating operation switch 11a. Although not illustrated, a power switch of mouth cleaning device 1 may be disposed on an outer surface of case 15.

Next, effects of mouth cleaning device nozzle 10 and mouth cleaning device 1 will be described.

Nozzle 10 according to the present exemplary embodiment includes one bristle bundle 30 at distal end portion 21 in the longitudinal direction. The protruding direction of bristle bundle 30 is in an angular range of 85° to 95° with respect to the longitudinal direction. The protruding direction of bristle bundle 30 may be perpendicular to the longitudinal direction.

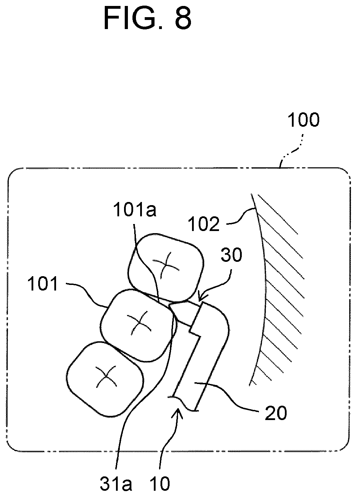

Fig. 8 is a schematic diagram illustrating a state in mouth 100 for describing an effect of nozzle 10 according to the present exemplary embodiment. In mouth 100 of Fig. 8, three back teeth 101 and a part of cheek 102 are illustrated.

Nozzle 10 according to the present exemplary embodiment is a nozzle, and thus, the nozzle has a structure in which the liquid is ejected from distal end portion 21. Since one bristle bundle 30 is provided at distal end portion 21, nozzle 10 can brush a desired position in mouth 100 with bristle bundle 30 while ejecting the liquid from bristle bundle 30 itself or the vicinity of bristle bundle 30. Accordingly, according to nozzle 10, for example, it is possible to enhance detergency such as plaque removing quality as compared to a nozzle of a prior art that merely ejects a jet water flow.

According to nozzle 10 of the present exemplary embodiment, the user can bring distal end 31a of bristle bundle 30 into contact with the surface of back tooth 101, the interdental part, and the like approximately perpendicularly. That is, the user can bring distal end 31a of bristle bundle 30 into contact with a desired portion in mouth 100 with higher accuracy. The user can bring distal end 31a of bristle bundle 30 into contact with a portion that is difficult to reach with the nozzle of the prior art in mouth 100.

For example, as illustrated in Fig. 8, even though a desired portion in mouth 100 is an interdental part of back tooth 101 where unpolished teeth or dental plaque is generally likely to occur, the user can easily insert distal end 31a of bristle bundle 30 and easily bring distal end 31a into contact with interdental surface 101a of back tooth 101. The user performs brushing by bringing distal end 31a into contact with interdental surface 101a while ejecting liquid L as described above, and thus, such an interdental part can be directly cleaned.

For example, in the mouth of the user during orthodontic treatment, a treatment wire or a bracket is often attached to the tooth. Even in this case, according to nozzle 10, since distal end 31a of bristle bundle 30 can be brought into contact with a narrow gap such as below the wire or around the bracket, an unpolished portion is further reduced. According to nozzle 10, food debris or the like directly entangled in the wire or the bracket can be easily removed. Since an orthodontic treatment period is generally a long period of time, when unpolished or remaining food debris concentrates on a specific portion, there is a concern that tooth decay or the like occurs in the future. Thus, it is particularly effective for the user who is undergoing orthodontic treatment to reduce such unpolished specific portions with nozzle 10. Accordingly, according to nozzle 10, the usability for the user can be improved.

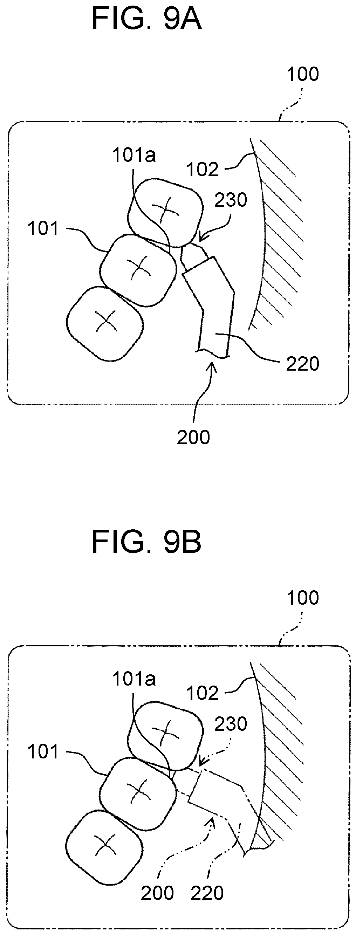

Figs. 9A and 9B are schematic diagrams illustrating a state in mouth 100 for describing an effect of nozzle 200 with brush 230 of the prior art as a comparative example. Three back teeth 101 in mouth 100 and a part of cheek 102 illustrated in Figs. 9A and 9B are under the same conditions as those illustrated in Fig. 8.

In nozzle 200 of the prior art, for example, an inclination angle of a protruding direction of brush 230 with respect to a longitudinal direction of nozzle 200 constituted by nozzle handle 220 is set to be gentle. As illustrated in Fig. 9A, since a distal end of brush 230 is in a posture of being directed obliquely largely with respect to a surface, the interdental part, and the like, particularly for back tooth 101, the user hardly brings the distal end of brush 230 into contact with interdental surface 101a. That is, it is more difficult for the user to bring the distal end of brush 230 into contact with a desired portion in mouth 100 with higher accuracy than nozzle 10 according to the present exemplary embodiment. On the other hand, as indicated by an imaginary line in Fig. 9B, when the user tries to forcibly bring the distal end of brush 230 into contact with interdental surface 101a, a part of nozzle handle 220 may interfere with cheek 102 in the future. As described above, it cannot be said that nozzle 200 of the prior art is user-friendly.

As described above, according to the present exemplary embodiment, it is possible to provide nozzle 10 which is advantageous in enhancing detergency such as plaque removing quality or improving the usability for the user.

In nozzle 10 according to the present exemplary embodiment, distal end portion 21 may eject liquid L to the outside through bristle transplantation portion 32 of bristle bundle 30.

According to such nozzle 10, since liquid L led out from bristle transplantation portion 32 comes into contact with a part of bristle bundle 30, that is, bristle portion 31, the tendency of the ejection of bristle bundle 30 to the outside is suppressed. Accordingly, the scattering of liquid L can be reduced as compared to the case where liquid L is ejected without passing through bristle transplantation portion 32.

In the present exemplary embodiment, first through hole 32d is exemplified as a portion of bristle transplantation portion 32 through which liquid L passes. However, for example, when it is not necessary to forcibly suppress the tendency of the ejection of liquid L, liquid L may not necessarily flow inside bristle bundle 30.

In nozzle 10 according to the present exemplary embodiment, bristle bundle 30 may have space region R through which liquid L led out from bristle transplantation portion 32 flows. Space region R may be gradually narrowed from bristle transplantation portion 32 toward distal end 31a.

According to such nozzle 10, thereafter, since liquid L led out from bristle transplantation portion 32 is guided along a shape of space region R, in this case, liquid L is easily directed to the central axis of bristle bundle 30. Accordingly, it is possible to further suppress the tendency of the ejection of bristle bundle 30 to the outside.

In nozzle 10 according to the present exemplary embodiment, distal end 31a of bristle bundle 30 may be cut into a conical shape in which vertex angle θ2 is an acute angle.

According to such nozzle 10, since distal end 31a of bristle bundle 30 easily enters a narrow gap such as an interdental part, the detergency can be further improved.

In nozzle 10 according to the present exemplary embodiment, bristle transplantation portion 32 may be formed by being solidified by thermal fusion from the state of the bristles.

According to such nozzle 10, bristle transplantation portion 32 having first through hole 32d for leading out the liquid can be more simply manufactured. For example, due to the configuration, it is difficult to manufacture bristle transplantation portion 32 having first through hole 32d by a manufacturing method using a flat wire adopted in a general toothbrush.

In nozzle 10 according to the present exemplary embodiment, bristle transplantation portion 32 may have a flange shape.

According to such nozzle 10, it is possible to cause flange-shaped bristle transplantation portion 32 to function as a stopper that directly comes into contact with an attachment target such as distal end portion 21. Accordingly, for example, it is not necessary to prepare a flange member for preventing bristle bundle 30 from falling off from distal end portion 21 in addition to bristle bundle 30 including bristle transplantation portion 32.

Nozzle 10 according to the present exemplary embodiment may include nozzle handle 20 including distal end portion 21 and extending along the longitudinal direction, and bristle bundle holder 40 that holds bristle bundle 30 inside distal end portion 21. Bristle bundle holder 40 may have fitting portion 43 press-fitted into first inner wall 21a of distal end portion 21.

According to such nozzle 10, first, since bristle bundle holder 40 holds bristle bundle 30 regardless of when nozzle 10 is assembled or after the nozzle is assembled, bristle bundle 30 can be easily positioned with respect to distal end portion 21. Since bristle bundle holder 40 is fixed to distal end portion 21 by press-fitting fitting portion 43 into first inner wall 21a, the sealability of fitting portion 43 with respect to distal end portion 21 is secured. With reference to Fig. 7, fitting portion 43 is press-fitted into first inner wall 21a, and thus, the liquid in the space surrounded by first inner wall 21a, second inner wall 41a, and third inner wall 52a hardly leaks from between fitting portion 43 and first inner wall 21a toward bristle bundle 30. Accordingly, since it is not necessary to separately use a sealing material such as an O-ring in distal end portion 21, the number of components of nozzle 10 can be reduced, and nozzle 10 can be downsized.

In nozzle 10 according to the present exemplary embodiment, distal end portion 21 may include first opening portion 21b having an inner periphery smaller than the outer periphery of bristle transplantation portion 32, and second opening portion 21c facing first opening portion 21b and having an inner periphery larger than the outer periphery of bristle transplantation portion 32. Bristle bundle 30 and bristle bundle holder 40 may be introduced into distal end portion 21 from second opening portion 21c toward first opening portion 21b.

According to such nozzle 10, since first opening portion 21b which is one opening portion is used as a locking portion of bristle bundle 30 introduced into distal end portion 21, a reduction in the number of components of nozzle 10 is achieved.

In nozzle 10 according to the present exemplary embodiment, first facing surface 43a of fitting portion 43 facing first inner wall 21a of distal end portion 21 may be inclined in a direction away from first inner wall 21a of distal end portion 21 along the introduction direction of bristle bundle holder 40.

According to such nozzle 10, when bristle bundle holder 40 is introduced into distal end portion 21, bristle bundle holder 40 is guided by the inclination of first facing surface 43a to come into contact with first inner wall 21a, and is finally fitted. Accordingly, bristle bundle holder 40 can be easily inserted into distal end portion 21.

As illustrated in Fig. 7, as first facing surface 43a is inclined, second end portion 43b which is the end portion of first facing surface 43a on a side opposite to engagement shaft 42 has an edge shape. Accordingly, after fitting portion 43 is fitted to first inner wall 21a, since second end portion 43b is crushed, the sealability between fitting portion 43 and first inner wall 21a can be easily obtained.

In nozzle 10 according to the present exemplary embodiment, nozzle handle 20 may have extension flow path 20a along the longitudinal direction. Bristle bundle holder 40 may have hook 41d that is partially positioned inside extension flow path 20a when bristle bundle holder 40 is housed inside distal end portion 21.

As described above, bristle bundle holder 40 is press-fitted into first inner wall 21a of distal end portion 21. However, unless some countermeasure is taken, it is conceivable that an internal pressure is applied at the time of ejecting liquid L, and thus, a positional deviation from first inner wall 21a occurs. On the other hand, in the present exemplary embodiment, since bristle bundle holder 40 has hook 41d, even though bristle bundle holder 40 tries to move, hook 41d abuts on the inner wall of extension flow path 20a and bristle bundle holder 40 is positioned. Accordingly, according to such nozzle 10, the positional deviation of bristle bundle holder 40 can be prevented.

Nozzle 10 according to the present exemplary embodiment may include back surface cover 50 that covers second opening portion 21c and is installed at distal end portion 21, and back surface cover 50 may be welded to second opening portion 21c by ultrasonic welding.

According to such nozzle 10, since back surface cover 50 is fixed by ultrasonic welding while covering second opening portion 21c, it is possible to easily obtain sealability with respect to second opening portion 21c. In this case, back surface cover 50 is a separate member from bristle bundle holder 40. Accordingly, at the time of welding, since a force is applied only to the welded portion of back surface cover 50, higher sealability can be obtained.

In nozzle 10 according to the present exemplary embodiment, back surface cover 50 may have edge portion 52c sharpened toward a part of distal end portion 21.

According to such nozzle 10, a part of edge portion 52c comes into contact with distal end portion 21 when back surface cover 50 is welded. At this time, edge portion 52c is easily embedded in distal end portion 21 due to the sharpened shape thereof. As a result, since a projection area increases as the welded portion on a side of back surface cover 50 with respect to distal end portion 21, sufficient welding strength can be secured. Accordingly, for example, even though nozzle 10 receives an impact at the time of its falling, back surface cover 50 can be prevented from peeling off in advance.

In nozzle 10 according to the present exemplary embodiment, back surface cover 50 may be integrated with bristle bundle holder 40.

For example, when high sealability is not required for the sealability of back surface cover 50 with respect to second opening portion 21c, bristle bundle holder 40 and back surface cover 50 can be used as one member. In this case, the number of components of nozzle 10 can be further reduced.

Nozzle 10 according to the present exemplary embodiment includes one bristle bundle 30 at distal end portion 21 in the longitudinal direction. Here, distal end portion 21 may eject liquid L to the outside through bristle transplantation portion 32 of bristle bundle 30. Bristle bundle 30 has space region R through which liquid L led out from bristle transplantation portion 32 flows, and space region R may be gradually narrowed from bristle transplantation portion 32 toward distal end 31a. Distal end 31a of bristle bundle 30 may be cut into a conical shape in which vertex angle θ2 is an acute angle.

That is, in nozzle 10 mentioned herein, angle θ1 of the protruding direction of bristle bundle 30 with respect to the longitudinal direction of nozzle 10 described above is not limited.

According to such nozzle 10, since features particularly relevant to bristle bundle 30 have already been described, it may be advantageous at least for enhancing detergency such as plaque removing quality.

### REFERENCE MARKS IN THE DRAWINGS

- 10: nozzle
- 20a: extension flow path
- 21: distal end portion
- 21a: first inner wall
- 21b: first opening portion
- 21c: second opening portion
- 30: bristle bundle
- 31a: distal end
- 32: bristle transplantation portion
- 32a: outer peripheral portion
- 32b: second facing surface
- 40: bristle bundle holder
- 41d: hook
- 43: fitting portion
- 43a: first facing surface
- 50: back surface cover
- 52c: edge portion
- 100: mouth
- L: liquid
- R: space region
- θ1: angle
- θ2: vertex angle

## Claims

1. A mouth cleaning device nozzle, comprising:
a bristle bundle (30) at a distal end portion (21) in a longitudinal direction (Z) of the mouth cleaning device nozzle (10), wherein
a protruding direction (X) of the bristle bundle (30) is in an angular range of 85° to 95° with respect to the longitudinal direction (Z);
the bristle bundle (30) includes a bristle portion (31) and a bristle transplantation portion (32), the bristle portion (31) including bristles;
the distal end portion (21) ejects a liquid (L) to an outside through the bristle transplantation portion (32) of the bristle bundle (30);
the bristle transplantation portion (32) is a base of the bristle portion (31);
the mouth cleaning device nozzle (10) further comprises a nozzle handle (20) that comprises the distal end portion (21), and is along the longitudinal direction (Z);
**characterized in that**
the mouth cleaning device nozzle (10) further comprises a bristle bundle holder (40) that holds the bristle bundle (30) inside the distal end portion (21);
the bristle bundle holder (40) has a fitting portion (43) press-fitted into an inner wall (21a) of the distal end portion (21) and an engagement shaft (42) pushed into a through hole (32d) formed in the bristle transplantation portion (32);
the distal end portion (21) comprises a first opening portion (21b) having an inner periphery smaller than an outer periphery of the bristle transplantation portion (32) and a second opening portion (21c) facing the first opening portion (21b) and having an inner periphery larger than the outer periphery of the bristle transplantation portion (32);
the bristle bundle (30) and the bristle bundle holder (40) are introduced into the inside of the distal end portion (21) from the second opening portion (21c) toward the first opening portion (21b) in the protruding direction (X) of the bristle bundle (30); and
the engagement shaft (42) is engaged with the through hole (32d) formed in the bristle transplantation portion (32), a part of an outer peripheral portion (32a) of the bristle transplantation portion (32) is fitted into the inner wall (21a) of the distal end portion (21) and a part of the fitting portion (43) is fitted into the inner wall (21a) of the distal end portion (21) so that the bristle bundle (30) and the bristle bundle holder (40) are attached to the distal end portion (21).

2. The mouth cleaning device nozzle according to Claim 1, wherein
the protruding direction (X) of the bristle bundle (30) is perpendicular to the longitudinal direction (Z).

3. The mouth cleaning device nozzle according to Claim 1 or 2, wherein
the bristle bundle (30) has a space region (R) in which the liquid (L) led out from the bristle transplantation portion (32) flows;
the space region (R) is gradually narrowed from the bristle transplantation portion (32) toward a distal end of the bristle bundle (30); and
the space region (R) extends along the protruding direction (X) of the bristle bundle (30).

4. The mouth cleaning device nozzle according to any one of Claims 1 to 3, wherein
the distal end of the bristle bundle (30) is cut into a conical shape of which a vertex angle (θ2) is an acute angle.

5. The mouth cleaning device nozzle according to any one of Claims 1 to 4, wherein
the bristle transplantation portion (32) is formed by being solidified by thermal fusion from a state of bristles.

6. The mouth cleaning device nozzle according to any one of Claims 1 to 5, wherein
the bristle transplantation portion (32) has a flange shape.

7. The mouth cleaning device nozzle according to any one of Claims 1 to 6, wherein
a first facing surface (43a) of the fitting portion (43) facing the inner wall (21a) of the distal end portion (21) is inclined in a direction away from the inner wall (21a) of the distal end portion (21) along an introduction direction of the bristle bundle holder (40).

8. The mouth cleaning device nozzle according to any one of Claims 1 to 7, wherein
the nozzle handle (20) has an extension flow path (20a) along the longitudinal direction (Z), and the bristle bundle holder (40) has a hook (41d) that is partially positioned inside the extension flow path (20a) when the bristle bundle holder (40) is housed in the inside of the distal end portion (21).

9. The mouth cleaning device nozzle according to any one of Claims 1 to 8, further comprising:
a back surface cover (50) that covers the second opening portion (21c) and is installed at the distal end portion (21), wherein
the back surface cover (50) is welded to the second opening portion (21c) by ultrasonic welding.

10. The mouth cleaning device nozzle according to Claim 9, wherein
the back surface cover (50) has an edge portion (52c) sharpened toward a part of the distal end portion (21).

11. The mouth cleaning device nozzle according to Claim 9 or 10, wherein
the back surface cover (50) is integrated with the bristle bundle holder (40).

## Patentansprüche

1. Mundreinigungsvorrichtungs-Düse, umfassend:
ein Borstenbündel (30) an einem distalen Endabschnitt (21) in einer Längsrichtung (Z) der Mundreinigungsvorrichtungs-Düse (10), wobei
sich eine Vorstehrichtung (X) des Borstenbündels (30) in einem Winkelbereich von 85° bis 95° in Bezug auf die Längsrichtung (Z) befindet;
das Borstenbündel (30) einen Borstenabschnitt (31) und Borstentransplantationsabschnitt (32) umfasst, wobei der Borstenabschnitt (31) Borsten umfasst;
der distale Endabschnitt (21) eine Flüssigkeit (L) zu einer Außenseite durch den Borstentransplantationsabschnitt (32) des Borstenbündels (30) herausspritzt;
der Borstentransplantationsabschnitt (32) eine Basis des Borstenabschnitts (31) ist;
die Mundreinigungsvorrichtungs-Düse (10) ferner einen Düsengriff (20) umfasst, der den distalen Endabschnitt (21) umfasst und sich entlang der Längsrichtung (Z) befindet;
**dadurch gekennzeichnet, dass**
die Mundreinigungsvorrichtungs-Düse (10) ferner einen Borstenbündelhalter (40) umfasst, der das Borstenbündel (30) im distalen Endabschnitt (21) hält;
der Borstenbündelhalter (40) einen Einpassungsabschnitt (43) mit einer Presspassung in eine Innenwand (21a) des distalen Endabschnitts (21) und eine in ein im Borstentransplantationsabschnitt (32) gebildeten Durchgangsloch (32d) geschobene Eingriffswelle (42) umfasst;
der distale Endabschnitt (21) einen ersten Öffnungsabschnitt (21b) mit einem Innenumfang kleiner als ein Außenumfang des Borstentransplantationsabschnitt (32) und einen zum ersten Öffnungsabschnitt (21b) zeigenden zweiten Öffnungsabschnitt (21c) mit einem Innenumfang größer als der Außenumfang des Borstentransplantationsabschnitts (32) umfasst;
das Borstenbündel (30) und der Borstenbündelhalter (40) in die Innenseite des distalen Endabschnitts (21) vom zweiten Öffnungsabschnitt (21c) zum ersten Öffnungsabschnitt (21b) in der Vorstehrichtung (X) des Borstenbündels (30) eingeführt sind; und
sich die Eingriffswelle (42) im Eingriff mit dem im Borstentransplantationsabschnitt (32) gebildeten Durchgangsloch (32d) befindet, ein Teil eines Außenumfangsabschnitts (32a) des Borstentransplantationsabschnitts (32) in die Innenwand (21a) des distalen Endabschnitts (21) eingepasst ist und ein Teil des Einpassungsabschnitts (43) in die Innenwand (21a) des distalen Endabschnitts (21) eingepasst ist, so dass das Borstenbündel (30) und der Borstenbündelhalter (40) am distalen Endabschnitt (21) befestigt sind.

2. Mundreinigungsvorrichtungs-Düse nach Anspruch 1, wobei
die Vorstehrichtung (X) des Borstenbündels (30) senkrecht zur Längsrichtung (Z) ist.

3. Mundreinigungsvorrichtungs-Düse nach Anspruch 1 oder 2, wobei
das Borstenbündel (30) einen Raumbereich (R) aufweist, in dem die aus dem Borstentransplantationsabschnitt (32) herausgeleitete Flüssigkeit (L) strömt;
der Raumbereich (R) schrittweise vom Borstentransplantationsabschnitt (32) zu einem distalen Ende des Borstenbündels (30) enger wird; und
sich der Raumbereich (R) entlang der Vorstehrichtung (X) des Borstenbündels (30) erstreckt.

4. Mundreinigungsvorrichtungs-Düse nach einem der Ansprüche 1 bis 3, wobei
das distale Ende des Borstenbündels (30) in eine konische Form geschnitten ist, von der ein Scheitelwinkel (92) ein spitzer Winkel ist.

5. Mundreinigungsvorrichtungs-Düse nach einem der Ansprüche 1 bis 4, wobei
der Borstentransplantationsabschnitt (32) durch Verfestigung durch thermisches Schweißen aus einem Zustand von Borsten gebildet wird.

6. Mundreinigungsvorrichtungs-Düse nach einem der Ansprüche 1 bis 5, wobei der Borstentransplantationsabschnitt (32) eine Flanschform aufweist.

7. Mundreinigungsvorrichtungs-Düse nach einem der Ansprüche 1 bis 6, wobei
eine zur Innenwand (21a) des distalen Endabschnitts (21) zeigende erste Oberfläche (43a) des Einpassungsabschnitts (43) in einer Richtung von der Innenwand (21a) des distalen Endabschnitts (21) weg entlang einer Einführrichtung des Borstenbündelhalters (40) geneigt ist.

8. Mundreinigungsvorrichtungs-Düse nach einem der Ansprüche 1 bis 7, wobei
der Düsengriff (20) einen Verlängerungsstromweg (20a) entlang der Längsrichtung (Z) aufweist und der Borstenbündelhalter (40) einen Haken (41d) aufweist, der teilweise im Verlängerungsstromweg (20a) angeordnet ist, wenn sich der Borstenbündelhalter (40) im Inneren des distalen Endabschnitts (21) befindet.

9. Mundreinigungsvorrichtungs-Düse nach einem der Ansprüche 1 bis 8, ferner umfassend:
eine Rückseitenabdeckung (50), die den zweiten Öffnungsabschnitt (21c) abdeckt und am distalen Endabschnitt (21) installiert ist, wobei
die Rückseitenabdeckung (50) durch Ultraschallschweißen an den zweiten Öffnungsabschnitt (21c) geschweißt ist.

10. Mundreinigungsvorrichtungs-Düse nach Anspruch 9, wobei
die Rückseitenabdeckung (50) einen zu einem Teil des distalen Endabschnitts (21) angespitzten Randabschnitt (52c) aufweist.

11. Mundreinigungsvorrichtungs-Düse nach Anspruch 9 oder 10, wobei
die Rückseitenabdeckung (50) mit dem Borstenbündelhalter (40) integriert ist.

## Revendications

1. Buse de dispositif de nettoyage buccal, comprenant :
un faisceau de soies (30) au niveau d'une portion d'extrémité distale (21) dans un sens longitudinal (Z) de la buse de dispositif de nettoyage buccal (10),
un sens de saillie (X) du faisceau de soies (30) se trouvant sous une plage angulaire de 85° à 95° par rapport au sens longitudinal (Z) ;
le faisceau de soies (30) incluant une portion de soies (31) et une portion de transplantation de soies (32), la portion de soies (31) incluant des soies ;
la portion d'extrémité distale (21) éjectant un liquide (L) vers un extérieur à travers la portion de transplantation de soies (32) du faisceau de soies (30) ;
la portion de transplantation de soies (32) étant une base de la portion de soies (31) ;
la buse de dispositif de nettoyage buccal (10) comprenant en outre une poignée de buse (20) qui comprend la portion d'extrémité distale (21), et qui se trouve le long du sens longitudinal (Z) ;
**caractérisée en ce que**
la buse de dispositif de nettoyage buccal (10) comprend en outre un support de faisceau de soies (40) qui maintient le faisceau de soies (30) à l'intérieur de la portion d'extrémité distale (21) ;
le support de faisceau de soies (40) ayant une portion d'ajustement (43) ajustée par compression dans une paroi interne (21a) de la portion d'extrémité distale (21) et une tige d'engagement (42) poussée dans un trou traversant (32d) formé dans la portion de transplantation de soies (32) ;
la portion d'extrémité distale (21) comprenant une première portion d'ouverture (21b) ayant une périphérie interne plus petite qu'une périphérie externe de la portion de transplantation de soies (32) et une seconde portion d'ouverture (21c) faisant face à la première portion d'ouverture (21b) et ayant une périphérie interne plus grande que la périphérie externe de la portion de transplantation de soies (32) ;
le faisceau de soies (30) et le support de faisceau de soies (40) étant introduits dans l'intérieur de la portion d'extrémité distale (21) depuis la seconde portion d'ouverture (21c) vers la première portion d'ouverture (21b) dans le sens de saillie (X) du faisceau de soies (30) ; et
la tige d'engagement (42) étant engagée avec le trou traversant (32d) formé dans la portion de transplantation de soies (32), une partie d'une portion périphérique externe (32a) de la portion de transplantation de soies (32) étant ajustée dans la paroi interne (21a) de la portion d'extrémité distale (21) et une partie de la portion d'ajustement (43) étant ajustée dans la paroi interne (21a) de la portion d'extrémité distale (21) de sorte que le faisceau de soies (30) et le support de faisceau de soies (40) sont fixés au niveau de la portion d'extrémité distale (21).

2. Buse de dispositif de nettoyage buccal selon la revendication 1,
le sens de saillie (X) du faisceau de soies (30) étant perpendiculaire au sens longitudinal (Z).

3. Buse de dispositif de nettoyage buccal selon la revendication 1 ou 2,
le faisceau de soies (30) ayant une région d'espace (R) dans laquelle le liquide (L) dirigé depuis la portion de transplantation de soies (32) s'écoule ;
la région d'espace (R) étant progressivement rétrécie depuis la portion de transplantation de soies (32) vers une extrémité distale du faisceau de soies (30) ; et
la région d'espace (R) s'étendant le long du sens de saillie (X) du faisceau de soies (30).

4. Buse de dispositif de nettoyage buccal selon l'une quelconque des revendications 1 à 3,
l'extrémité distale du faisceau de soies (30) étant coupée selon une forme conique dont un angle de sommet (02) est un angle aigu.

5. Buse de dispositif de nettoyage buccal selon l'une quelconque des revendications 1 à 4,
la portion de transplantation de soies (32) étant formée en étant solidifiée par fusion thermique depuis un état de soies.

6. Buse de dispositif de nettoyage buccal selon l'une quelconque des revendications 1 à 5,
la portion de transplantation de soies (32) ayant une forme de collerette.

7. Buse de dispositif de nettoyage buccal selon l'une quelconque des revendications 1 à 6,
une première surface faisant saillie (43a) de la portion d'ajustement (43) faisant face à la paroi interne (21a) de la portion d'extrémité distale (21) étant inclinée dans un sens éloigné de la paroi interne (21a) de la portion d'extrémité distale (21) le long d'un sens d'introduction du support de faisceau de soies (40).

8. Buse de dispositif de nettoyage buccal selon l'une quelconque des revendications 1 à 7,
la poignée de buse (20) ayant un trajet d'écoulement d'extension (20a) le long du sens longitudinal (Z), et le support de faisceau de soies (40) ayant un crochet (41d) qui est partiellement positionné à l'intérieur du trajet d'écoulement d'extension (20a) lorsque le support de faisceau de soies (40) est logé dans l'intérieur de la portion d'extrémité distale (21).

9. Buse de dispositif de nettoyage buccal selon l'une quelconque des revendications 1 à 8, comprenant en outre :
un couvercle de surface arrière (50) qui recouvre la seconde portion d'ouverture (21c) et qui est installé au niveau de la portion d'extrémité distale (21),
le couvercle de surface arrière (50) étant soudé à la seconde portion d'ouverture (21c) par soudage ultrasonore.

10. Buse de dispositif de nettoyage buccal selon la revendication 9,
le couvercle de surface arrière (50) ayant une portion bord (52c) aiguisée vers une partie de la portion d'extrémité distale (21).

11. Buse de dispositif de nettoyage buccal selon la revendication 9 ou 10,
le couvercle de surface arrière (50) étant intégré au support de faisceau de soies (40).
